# EUROPEAN PATENT SPECIFICATION

(11) **EP 0 517 007 B1**
(45) Date of publication and mention of the grant of the patent: **17.07.1996**
(21) Application number: 92107991.9
(22) Date of filing: 12.05.1992
(51) Int. Cl.: H04N 1/12

(54) **Facsimile device**
Faksimilegerät
Dispositif de fac-similé

(30) Priority: 14.05.1991 JP 109298/91
(43) Date of publication of application: 09.12.1992
(73) Proprietor: SHARP KABUSHIKI KAISHA, Osaka-shi Osaka-fu (JP)
(72) Inventor: Kawai, Ryoichi, Kitakatsuragi-gun, Nara-ken (JP); Shiraishi, Kenichi, Yamatokoriyama-shi, Nara-ken (JP); Sakai, Katsuyuki, Nara-shi, Nara-ken (JP)
(74) Representative: TER MEER - MÜLLER - STEINMEISTER & PARTNER

(56) References cited:
- EP-A- 0 299 437
- EP-A- 0 361 459
- US-A- 4 677 495
- US-A- 4 812 917

## Description

### BACKGROUND OF THE INVENTION

### Field of the Invention

The present invention relates to a facsimile device and, more particularly, to a facsimile device in which an original is conveyed by an original conveying roller.

### Description of the Background Art

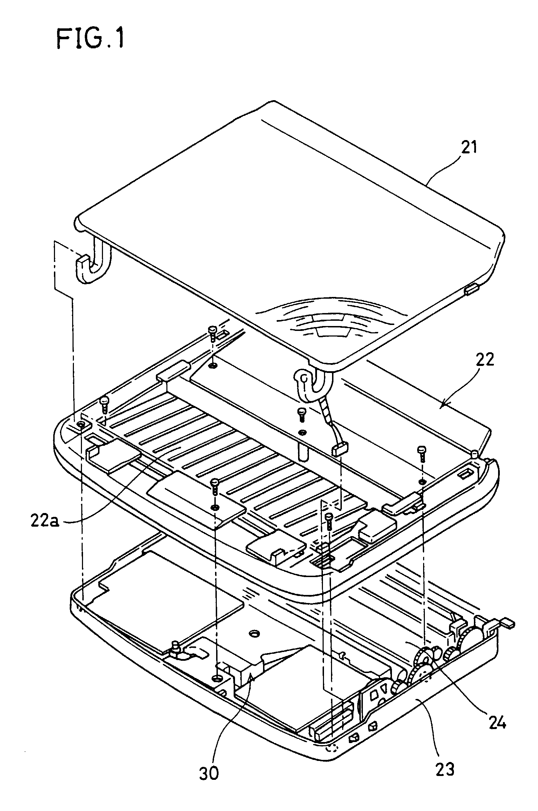

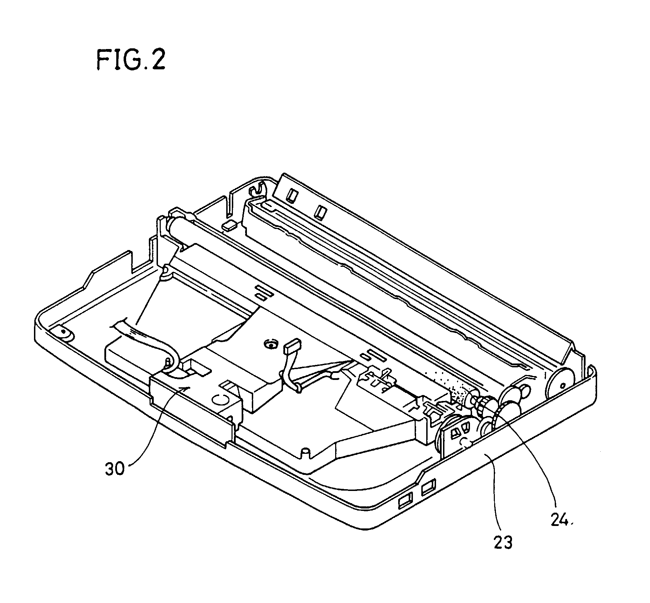

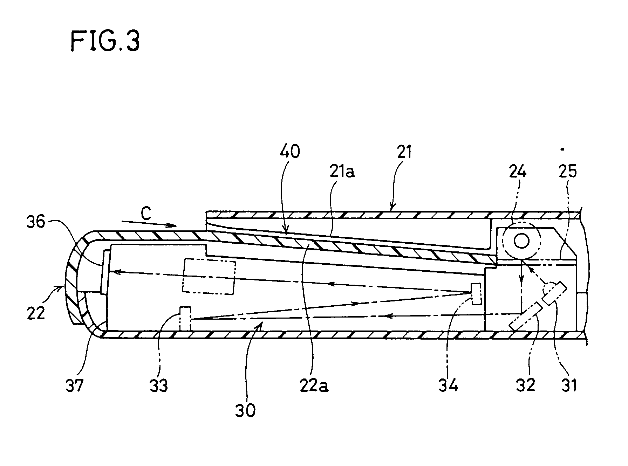

A facsimile device provided with an optical system unit having optical system members supported by a support member has been known. Fig. 1 is an exploded perspective view showing a conventional facsimile device, and Fig. 2 is a perspective view showing an optical system unit included in the facsimile device shown in Fig. 1. Fig. 3 is a vertical section showing the facsimile device shown in Fig. 1.

Referring to Figs. 1 and 2, the conventional facsimile device comprises a top plate 21, an upper cabinet 22, and a lower cabinet 23 accommodating an optical system unit 30 and an original conveying roller 24. Referring to Fig. 3, the conventional facsimile device has an original conveying path 40 formed between a guide projection portion 21a of top plate 21 and an original travel guide 22a of upper cabinet 22. An original is conveyed in a direction of C through original conveying path 40, so that the original is set in the device.

Referring to Fig. 3, optical system unit 30 includes a light source 31, mirrors 32, 33, 34, a lens 35 and CCD (Charge Coupled Device) 36. Light source 31, mirrors 32, 33, 34, lens 35 and CCD 36 are supported by a support member 37.

In operation of reading an original, light is directed from light source 31 to an original inserted between original conveying roller 24 and an abutting member 25 formed of, for example, glass. Light reflected by the original is incident upon CCD 36 via mirrors 32, 33, 34, and through lens 35, as indicated by a dot-dash line in Fig. 3. The incident light signal is converted into an electrical signal by CCD 36 for reading the original.

As described above, in a conventional case, an original is conveyed in a direction of C through original conveying path 40 formed between original travel guide 22a formed in upper cabinet 22 and guide projection portion 21a of top plate 21, so that the original is set in the device, as shown in Fig. 3.

However, in the above stated conventional structure, original travel guide 22a, together with guide projection portion 21a of top plate 21, forming original conveying path 40 is formed separately on upper cabinet 22. That is, original travel guide 22a must be formed separately on upper cabinet 22, because the top surface of support member 37 supporting several kinds of optical system members is formed to have an uneven shape corresponding to the shape of the optical system members. As a result, the apparatus becomes large-sized and it is difficult to make it compact. Also, since original travel guide 22a is separately provided, the cost of the device rises and it is difficult to reduce the cost of the device.

### SUMMARY OF THE INVENTION

One object of the present invention is to make a facsimile device compact.

Another object of the present invention is to reduce the cost of a facsimile device.

Yet another object of the present invention is to simplify a structure of a facsimile device.

According to one aspect of the present invention, a facsimile device in which an original is conveyed by an original conveying roller includes an optical system unit structured by a plurality of optical system members for reading the original, and a support member supporting the optical system unit and having at least one portion of its top surface serving as an original travel guide to the original conveying roller and including guide projection portions.

In operation, since at least one portion of the top surface of the support member supporting the optical system member is formed as the original travel guide to the original conveying roller, there is no need to provide the original travel guide separately as in the conventional case, so that the device can be made more compact.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is an exploded perspective view showing a conventional facsimile device.

Fig. 2 is a perspective view showing an optical system unit included in the facsimile device shown in Fig. 1.

Fig. 3 is a vertical section showing the facsimile device shown in Fig. 1.

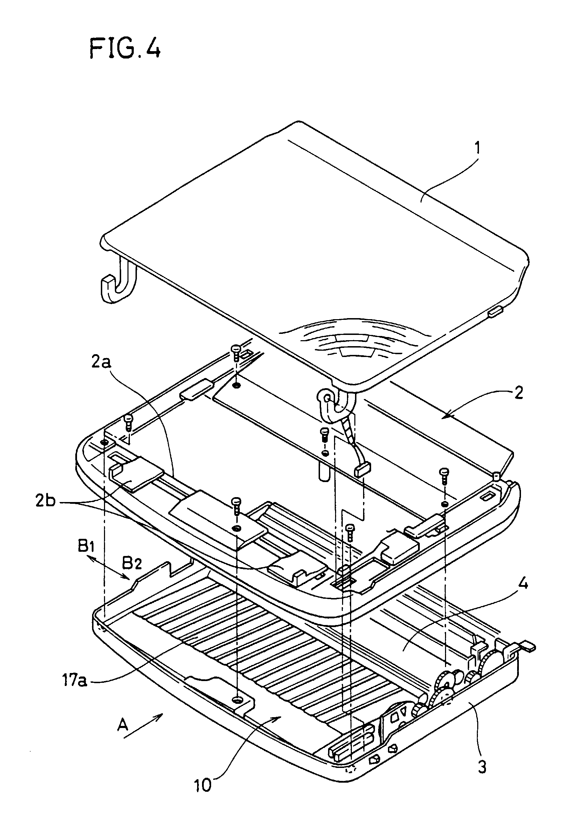

Fig. 4 is an exploded perspective view showing a facsimile device according to one embodiment of the present invention.

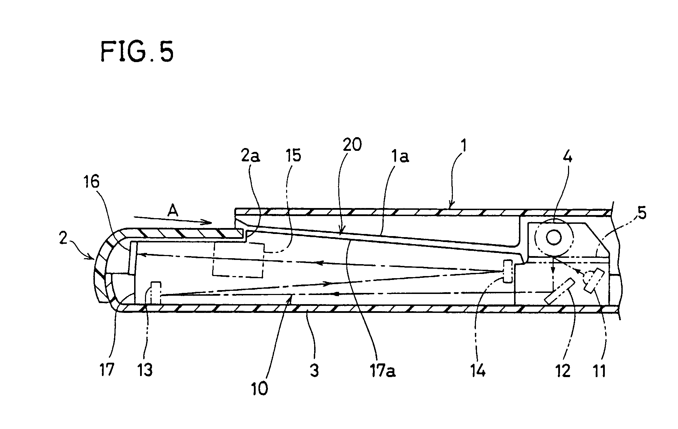

Fig. 5 is a vertical section showing the facsimile device shown in Fig. 4.

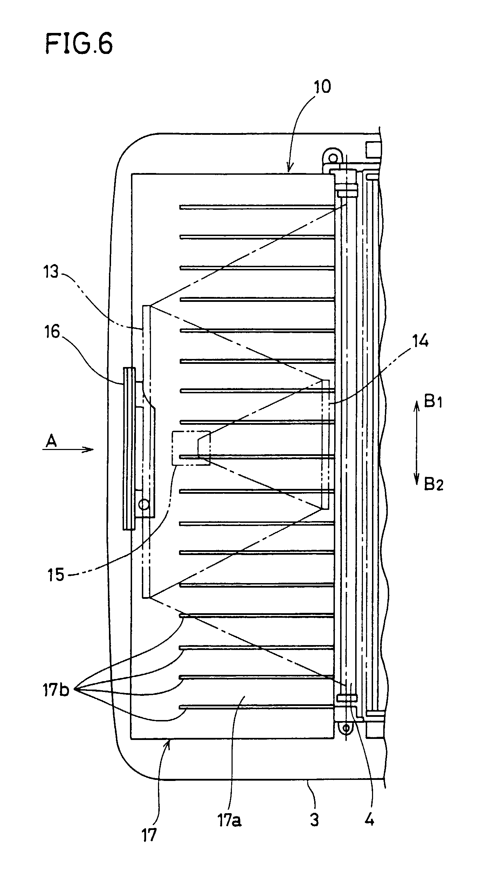

Fig. 6 is a plan view showing an optical system unit included in the facsimile device shown in Fig. 4.

### DESCRIPTION OF THE PREFERRED EMBODIMENTS

An embodiment of the present invention will be described with reference to the figures hereinafter.

First, referring to Fig. 4, a facsimile device according to the present embodiment includes a top plate 1, an upper cabinet 2 located under top plate 1 and a lower cabinet 3 located under upper cabinet 2. Lower cabinet 3 accommodates an optical system unit 10 for reading an original and an original conveying roller 4 for conveying the original. Upper cabinet 2 is provided with opening 2a. In the vicinity of opening 2a, a pair of original width defining members 2b, 2b are disposed which are movable in a direction of B₁ - B₂, that is, a transverse direction of the device.

Referring to Fig. 5, optical system unit 10 is comprised of several kinds of optical system members. Optical system unit 10 is comprised of a light source 11, mirrors 12, 13, 14, a lens 15, a CCD (Charge Coupled Device) 16 . Light source 11, mirrors 12, 13, 14, lens 15 and CCD 16 are supported by support member 17 formed of sheet metal or resin. In the vicinity of light source 11, original conveying roller 4 is pivotally supported. Also, an abutting member 5 formed of, for example, glass is disposed to abut original conveying roller 4.

Referring to Figs. 5 and 6, support member 17 is formed such that one portion of the top surface is inclined downwardly as it is closer to original conveying roller 4. Also, one portion of the top surface is provided with a plurality of guide projection portions 17b with predetermined spaces therebetween. Guide protrusion portions 17b extend in a direction of A, that is, a direction of conveying the original. Original travel guide 17a, together with guide projection portion 1a formed on the lower surface of top plate 1, forms original conveying path 20, as shown in Fig. 5. The original is guided to guide conveying roller 4 through original conveying path 20. As shown in Fig. 4, original travel guide 17a is exposed through opening 2a of upper cabinet 2 after the device is assembled.

Referring to Figs. 4 and 6, the operation of reading an original in the facsimile device will be described.

First, original width defining members 2b, 2b (see Fig. 4) are moved in a direction of B₁ - B₂ in accordance with the width of the original, so that the original does not move in a direction of B₁ - B₂.

The original whose move in the transverse direction is prevented as described above is conveyed in a direction of A through original conveying path 20 formed between guide projection portion 1a of top plate 1 (see Fig. 5) and original travel guide 17a of support member 17. The original is then inserted between original conveying roller 4 and abutting member 5.

Light is directed from light source 11 to the original inserted between original conveying roller 4 and abutting member 5. The light from light source 11 is incident upon lens 15 via mirrors 12, 13, 14 after being reflected by the original, as indicated by the dot-dash lines (see Figs. 5 and 6). The light is then converged by lens 15 and incident upon CCD 16. The light signal from the original is converted into an electrical signal in CCD 16. This operation is successively repeated as an original is conveyed with the rotation of original conveying roller 4, whereby the original is read.

As described above, in the present embodiment, original conveying path 20 is formed between projection guide portion 1a of top plate 1 and original travel guide 17a formed on one portion of the top surface of support member 17 for supporting optical system unit 10, as shown in Fig. 5. As shown in Fig. 4, original travel guide 17a is exposed through opening 2a provided in upper cabinet 2. As a result, in the present embodiment, unlike the conventional facsimile device shown in Fig. 3, the facsimile device does not need to have original travel guide 22a separately provided on upper cabinet 22. This makes it possible to greatly reduce the height of the facsimile device and therefore to make the device compact and flat. In addition, the cost of the device can be reduced.

Although, in the present embodiment, light source 11, mirrors 12, 13, 14, lens 15 and CCD 16 are used as optical system members, the present invention is not limited thereto and can include other optical system members.

Thus, in a facsimile device according to the present invention, at least one portion of a top surface of a support member supporting an optical system unit constituted by a plurality of optical system members is formed to serve as an original travel guide to an original conveying roller, so that an original travel guide does not need to be separately provided and the device can be made flat. As a result, it is possible to make the device compact and to reduce the cost of the device.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A facsimile device in which an original is conveyed by an original conveying roller, comprising:
an optical system unit (10) formed of a plurality of optical system members for reading said original; and
a support member (17) for supporting said optical system unit and having at least one portion of its top surface serving as an original travel guide (17a) to said original conveying roller and including guide projection portions (17b).

2. The facsimile device according to claim 1, wherein said guide projection portions (17b) are formed to extend along a travel direction of said original with predetermined spaces therebetween.

3. The facsimile device according to claim 1, wherein said portion (17a) of said support member which is to be the original travel guide has a predetermined slope such that it is inclined downwardly as it is closer to said original conveying roller.

4. The facsimile device according to claim 3, wherein said portion of said support member which is to be the original travel guide includes guide projection portions (17b) formed to extend along a travel direction of said original with predetermined spaces therebetween.

5. The facsimile device according to claim 1, wherein said optical system members forming the optical system unit comprise a light source (11), reflecting mirrors (12, 13, 14), a lens (15) and an image sensing device (16).

6. The facsimile device according to claim 1, wherein said facsimile device further comprises a top plate (1) having a guide portion (la) facing said portion of said support member which is to be the original travel guide.

7. The facsimile device according to claim 4, further comprising a top plate (1) having a guide portion (la) facing said portion of said support member which is to be the original travel guide.

8. The facsimile device according to claim 1, wherein said support member (17) is formed of either sheet metal or resin.

9. The facsimile device according to claim 1, wherein said conveying roller abuts an abutting member (5) for holding the original therebetween.

10. The facsimile device according to claim 9, wherein said abutting member is formed of glass (5).

## Patentansprüche

1. Faxgerät, bei dem eine Vorlage durch eine Vorlagentransportwalze transportiert wird, mit:
einem aus einer Mehrzahl von optischen Komponenten bestehenden optischen System (10) zum Lesen der Vorlage: und mit
einem zum Tragen des optischen Systems dienenden Träger (17), bei dem mindestens ein Führungsfortsätze (17b) aufweisender Teil seiner Oberseite als Vorlagenwegführung (17a) zu der Vorlagentransportwalze dient.

2. Faxgerät nach Anspruch 1, **dadurch gekennzeichnet**, daß die Führungsfortsätze (17b) sich entlang einer Transportrichtung der Vorlage mit bestimmten Abständen zueinander erstrecken.

3. Faxgerät nach Anspruch 1, **dadurch gekennzeichnet**, daß der als Vorlagenwegführung dienende Teil (17a) des Trägers eine bestimmte Schrägung aufweist, so daß er nach unten geneigt ist, wenn er in die Nähe der Vorlagentransportwalze gelangt.

4. Faxgerät nach Anspruch 3, **dadurch gekennzeichnet**, daß der als Vorlagenwegführung dienende Teil des Trägers Führungsfortsätze (17b) aufweist. die sich entlang einer Transportrichtung der Vorlage mit bestimmten Abständen zueinander erstrecken.

5. Faxgerät nach Anspruch 1, **dadurch gekennzeichnet**, daß die das optische System bildenden optischen Komponenten eine Lichtquelle (11). Spiegel (12, 13, 14), eine Linse (15) und einen Bildsensor (16) aufweisen.

6. Faxgerät nach Anspruch 1, **gekennzeichnet durch** eine Deckplatte (1) mit einer dem als Vorlagenwegführung dienenden Teil des Trägers gegenüberliegenden Führung (1a).

7. Faxgerät nach Anspruch 4, **gekennzeichnet durch** eine Deckplatte (1) mit einer dem als Vorlagenwegführung dienenden Teil des Trägers gegenüberliegenden Führung (1a).

8. Faxgerät nach Anspruch 1, **dadurch gekennzeichnet**, daß der Träger (17) entweder aus Blech oder aus Harz herstellbar ist.

9. Faxgerät nach Anspruch 1, **dadurch gekennzeichnet**, daß die Transportwalze ein Berührelement (5) berührt, um die Vorlage dazwischen zu halten.

10. Faxgerät nach Anspruch 9, **dadurch gekennzeichnet**, daß das Berührelement aus Glas (5) herstellbar ist.

## Revendications

1. Dispositif de fac-similé, dans lequel un original est déplacé par un rouleau de convoyage de l'original, comprenant :
une unité de système optique (10) formée d'une pluralité d'éléments d'un système optique pour lire ledit original; et
un élément de support (17) pour supporter ladite unité de système optique et dont au moins une partie de sa surface supérieure sert de guide (17a) prévu pour le déplacement de l'original jusqu'audit rouleau de convoyage de l'original, et comprenant des parties saillantes de guidage (17b).

2. Dispositif de fac-similé selon la revendication 1, dans lequel lesdites parties saillantes de guidage (17b) sont formées de manière à s'étendre dans une direction de déplacement dudit original en étant séparées les unes des autres par des espaces prédéterminés.

3. Dispositif de fac-similé selon la revendication 1, dans lequel ladite partie (17a) dudit élément de support, qui doit être le guide prévu pour le déplacement de l'original, possède une pente prédéterminée de sorte qu'elle est inclinée vers le bas en direction dudit rouleau de convoyage de l'original.

4. Dispositif de fac-similé selon la revendication 3, dans lequel ladite partie dudit élément de support, qui doit être le guide prévu pour le déplacement de l'original, comprend des parties saillantes de guidage (17b) formées de manière à s'étendre dans une direction de déplacement dudit original en étant séparées les unes des autres par des espaces prédéterminés.

5. Dispositif de fac-similé selon la revendication 1, dans lequel lesdits éléments du système optique constituant l'unité de système optique comprennent une source de lumière (11), des miroirs réfléchissants (12,13, 14), une lentille (15) et un dispositif (16) de détection d'images.

6. Dispositif de fac-similé selon la revendication 1, dans lequel ledit dispositif de fac-similé comporte en outre une plaque supérieure (1) possédant une partie de guidage (la) tournée vers ladite partie dudit élément de support qui doit être le guide prévu pour le déplacement de l'original.

7. Dispositif de fac-similé selon la revendication 4, comprenant en outre une plaque supérieure (1) possédant une partie de guidage (la) située en vis-à-vis de ladite partie dudit élément de support, qui doit être le guide prévu pour le déplacement de l'original.

8. Dispositif de fac-similé selon la revendication 1, dans lequel ledit élément de support (17) est formé d'une tôle ou d'une résine.

9. Dispositif de fac-similé selon la revendication 1, dans lequel ledit rouleau de convoyage est appliqué contre un élément de butée (5) pour retenir l'original entre lui-même et cet élément.

10. Dispositif de fac-similé selon la revendication 9, dans lequel ledit élément de butée est réalisé en verre (5).
